# EUROPÄISCHE PATENTSCHRIFT

(11) **EP 0 986 490 B1**
(45) Veröffentlichungstag und Bekanntmachung des Hinweises auf die Patenterteilung: **02.05.2003**
(21) Anmeldenummer: 98937441.8
(22) Anmeldetag: 03.06.1998
(51) Int. Cl.: B60L 13/10

(54) **FAHRSYSTEM FÜR EIN MAGNETSCHWEBEFAHRZEUG**
TRAVEL SYSTEM FOR A MAGNETIC LEVITATION VEHICLE
SYSTEME DE DEPLACEMENT POUR VEHICULE A SUSTENTATION MAGNETIQUE

(30) Priorität: 06.06.1997 DE 19723959
(43) Veröffentlichungstag der Anmeldung: 22.03.2000
(73) Patentinhaber: SIEMENS AKTIENGESELLSCHAFT, 80333 München (DE)
(72) Erfinder: FISCHPERER, Rolf, D-10719 Berlin (DE)
(86) Internationale Anmeldenummer: EP9803315
(87) Internationale Veröffentlichungsnummer: WO98055338

(56) Entgegenhaltungen:
- FR-A- 2 150 779
- US-A- 3 937 148

## Beschreibung

Die Erfindung bezieht sich auf ein Fahrsystem für ein Magnetschwebefahrzeug.

Ein Fahrsystem für ein Magnetschwebefahrzeug ist beispielsweise aus "Magnetbahn TRANSRAPID Die neue Dimension des Reisens" Hestra-Verlag Darmstadt, 1989, ISBN 3-7771-0208-3, insbesondere Seiten 76-79 bekannt. Das Fahrsystem eines Magnetschwebefahrzeuges erfüllt dabei im wesentlichen drei Funktionen, nämlich das Magnetschwebefahrzeug berührungslos auf einem Fahrweg zu tragen, zu führen und anzutreiben. Das Fahrsystem umfaßt hierzu ein Tragsystem, ein Führsystem und ein Antriebssystem. Das bekannte Führsystem enthält eine Führmagnetanordnung, deren Führmagnete seitlich derart angeordnet sind, daß der magnetische Fluß senkrecht zur Längsrichtung der im Fahrzeug befindlichen Seitenführschiene verläuft und auf diese Weise für die Seitenführung des Magnetschwebefahrzeuges sorgen. Paarweise im unteren Bereich des Schweberahmens des Magnetschwebefahrzeugs angeordnete Tragmagnete übernehmen die Tragfunktion. Die dafür erforderliche Induktion bildet zugleich die Erregung für den Antrieb, so daß das Tragsystem und das Antriebssystem durch ein und dieselbe Magnetanordnung gebildet ist und sich die Funktionen gegenseitig beeinflussen. Diesen Trag- bzw. Antriebsmagnetanordnungen sind fahrwegseitig Blechpakete zugeordnet. Das den Trag- bzw. Antriebsmagneten zugeordnete Blechpaket enthält eine stromdurchflossene Wanderfeldwicklung und bildet den Stator eines linearen synchronen Langstatorantriebes.

Aus der US-Patentschrift 5,605,100, ist ein Fahrsystem für ein Magnetschwebefahrzeug bekannt, bei dem die fahrzeugseitigen Antriebsmagnete gemeinsam mit fahrwegseitig angeordneten Stromleitern ein Gleichstrom-Antriebssystem bilden. Die Antriebsmagnete sind derart angeordnet, daß sie ein waagerechtes magnetisches Feld erzeugen, das den die elektrischen Leiter aufnehmenden Stator des Fahrwegs durchsetzt. Der Fahrweg ist hierzu in eine Vielzahl kleiner Abschnitte unterteilt, die jeweils mit einem zu- und abschaltbaren Gleichstrom gespeist werden, so daß nur diejenigen elektrischen Leiter stromleitend sind, die sich in der Nähe der beiden den Stator umgebenden Magnetpole eines Antriebsmagneten befinden. Bei diesem bekannten Fahrsystem muß jeder Statorabschnitt kleiner als die Breite des Antriebsmagneten sein, da sonst der Strom vom Antriebsmagneten verdrängt wird und in Bereichen des Stators fließt, in denen er nicht zur Bildung einer Schubkraft beitragen kann. Daraus ergibt sich die Notwendigkeit, eine Vielzahl schnell schaltender elektronischer Schalter einzusetzen, die einen hohen Investitions- und Instandhaltungsaufwand zur Folge haben.

Aus Philips techn. REV. 40, 1982, No. 11/12, S. 329-337, ist ein lineares Gleichstrom-Antriebssystem bekannt, bei dem an einander gegenüberliegenden Seiten eines mit einer Spulenbewicklung versehenen linearen Stators jeweils ein Antriebsmagnet angeordnet ist, dessen magnetische Achse waagerecht verläuft, so daß ein Pol des Antriebsmagneten dem Stator zugewandt und der andere Pol des Antriebsmagneten dem Stator abgewandt ist. Dadurch trägt nur ein Teil des von dem Antriebsmagneten erzeugten Magnetfeldes zur Erzeugung einer linearen Schubkraft bei. Außerdem müssen auch an den Außenseiten am Fahrweg zusätzliche Eisenkerne angeordnet werden, um zu verhindern, daß sich die von den Antriebsmagneten erzeugten und dem Stator abgewandten Magnetfeldanteile rückwärts über den Stator schließen und die Schubwirkung beeinträchtigen.

Aus der FR 2 150 749 A ist ein Fahrzeug mit Linearmotor bekannt. Dabei sind zwei Antriebsmagnete des Fahrzeuges hinsichtlich der Schiene einander gegenüberliegend angeordnet. Das Schienenteil, das als Stator dient, besteht aus abwechselnd hintereinander angeordneten magnetischen und nichtmagentischen Abschnitten. Über die Vorzeichen der Magnetpole der Antriebsmagnete ist nichts ausgesagt.

Der Erfindung liegt nun die Aufgabe zugrunde, ein Fahrsystem für ein Magnetschwebefahrzeug anzugeben, bei dem der technische Aufwand insbesondere für die fahrwegseitigen und in großer Länge erforderlichen Einrichtungen, dazu zählen insbesondere Fahrweg, Stator und Streckenkabel, verringert ist.

Die genannte Aufgabe wird gelöst mit einem Fahrsystem für ein Magnetschwebefahrzeug mit den Merkmalen des Patentanspruches 1. Gemäß der Erfindung enthält das Fahrsystem ein Antriebssystem, das eine fahrzeugseitige Antriebsmagnetanordnung umfaßt, die mit einem in Längsrichtung des Fahrwegs ausgedehnten Stator, auf dem eine sich in der Längsrichtung erstreckende Wicklung aufgewickelt ist, einen Linear-Gleichstrommotor bildet und deren Antriebsmagnete mit ihren die beiden Magnetpole verbindenden magnetischen Achsen quer zur Längsrichtung des Fahrwegs derart angeordnet sind, daß die in dieser Längsrichtung hintereinander angeordneten Magnetpole gleiches Vorzeichen haben und daß jeweils die zu einem Antriebsmagneten gehörenden Magnetpole auf einer Seite des Stators angeordnet und diesem zugewandt sind.

Die zum Antreiben erforderlichen fahrzeugseitigen Magnete sind somit derart angeordnet, daß durch diese im Fahrweg keine Wechselfelder induziert werden. Mit anderen Worten: Der im Fahrweg induzierte magnetische Fluß hat über die gesamte Länge des Fahrzeugs die gleiche Richtung und es liegt kein Vorzeichenwechsel bei Vorbeifahrt des Magnetschwebefahrzeuges vor.

Da die Magnetpole eines jeden Antriebsmagneten auf einer Seite des Stators angeordnet und diesem zugewandt sind, wird ein größtmöglicher Teil des außerhalb des Antriebsmagneten verlaufenden Magnetfeldes zu dem Stator eingekoppelt und ist somit bei der Schubkrafterzeugung wirksam.

Da die Antriebsmagnete im Stator bei Vorbeifahrt keine Wechselfelder induzieren, kann der Stator aus massivem ferromagnetischen Stahl gefertigt werden. Dadurch ist der Aufwand für die Fertigung des Stators verringert, da keine Blechpakete und Verschraubungen notwendig sind.

Da zum Betreiben des Linear-Gleichstrommotors lediglich Gleichströme einzuspeisen sind, entfallen außerdem die Wechselrichter und Transformatoren in den Unterwerken und die zugehörigen Schaltanlagen. Außerdem geht der Blindleistungsbedarf gegen Null. Desweiteren ist eine sehr einfache Regelung möglich, da keine Frequenz- und Phasenerfassung sowie -verarbeitung erforderlich ist. Aus diesem Grunde vereinfacht sich die zum Betrieb des Magnetschwebefahrzeugs erforderliche Datenübertragung zwischen Fahrzeug und Unterwerk erheblich. Da keine Wechselfelder induziert werden, treten außerdem keine Ummagnetisierungsverluste auf.

Vorzugsweise sind die Antriebsmagnete mit ihren zwischen den beiden Magnetpolen verlaufenden magnetischen Achsen vertikal angeordnet.

In einer alternativen Ausgestaltung der Erfindung können die Antriebsmagnete auch horizontal angeordnet werden.

In einer vorteilhaften Ausgestaltung der Erfindung enthält die Antriebsmagnetanordnung jeweils paarweise einander gegenüberliegende Antriebsmagnete, zwischen denen der Stator angeordnet ist. Durch diese Maßnahme kann eine hohe Antriebskraft mit relativ niedrigem Statorstrom erzielt werden. Dadurch reduzieren sich die Verluste auf den Kabeln.

Vorzugsweise enthält der Stator zwei in Längsrichtung neben- bzw. untereinander angeordnete schraubenförmige Wicklungen. Dadurch kann jeder der Magnetpole zum Antrieb des Fahrzeugs beitragen und es ist ein einfacher Aufbau des Stators möglich. Alternativ ist eine Statorwicklung vorgesehen, die in einer Draufsicht in Längsrichtung eine Acht bildet.

In einer weiteren Ausgestaltung der Erfindung bei vertikaler Anordnung der Antriebsmagnete ist das Antriebssystem zugleich als Führsystem ausgebildet. Dies ermöglicht eine einfache Steuerung der Seitenführung des Magnetschwebefahrzeugs, die von der Antriebsfunktion vollkommen entkoppelt ist, obwohl die gleichen Bauteile für Antrieb und Seitenführung verwendet werden.

Bei einer horizontalen Anordnung der Antriebsmagnete ist das Antriebssystem vorzugsweise zugleich als Tragsystem ausgebildet. Dies ermöglicht eine einfache Steuerung des Tragsystems des Magnetschwebefahrzeuges, die von der Antriebsfunktion vollkommen entkoppelt ist, obwohl die gleichen Bauteile für Antrieb und Tragen verwendet werden.

In einer besonders vorteilhaften Ausgestaltung der Erfindung sind die Tragmagnete einer fahrzeugseitigen Tragmagnetanordnung mit ihren zwischen den beiden Magnetpolen verlaufenden magnetischen Achsen horizontal und quer zur Längsrichtung des Fahrwegs, insbesondere unterhalb des Fahrwegs, derart angeordnet, daß die in Längsrichtung hintereinander angeordneten Magnetpole gleichen Vorzeichen haben. Durch diese Maßnahme ist ebenfalls das Entstehen von Wechselfeldern im Fahrweg vermieden, so daß als Fahrweg eine ferromagnetische Tragplatte verwendet werden kann.

Weitere vorteilhafte Ausgestaltungen der Erfindung sind in den Unteransprüchen wiedergegeben. Zur weiteren Erläuterung der Erfindung wird auf die Ausführungsbeispiele der Zeichnung verwiesen. Es zeigen:
- FIG 1: ein Fahrsystem gemäß der Erfindung in einer schematischen Prinzipdarstellung,
- FIG 2: das Fahrsystem in einer vergrößerten Darstellung,
- FIG 3: den Aufbau eines Stators in einer bevorzugten Ausgestaltung der Erfindung,
- FIG 4 und 5: jeweils eine geeignete Bewicklung des Stators,
- FIG 6: eine Spannungsversorgung des Fahrwegs in einem schematischen Blockschaltbild,
- FIG 7: eine besonders vorteilhafte Anordnung zur elektrischen Versorgung des Fahrwegs ebenfalls in einer Prinzipdarstellung.

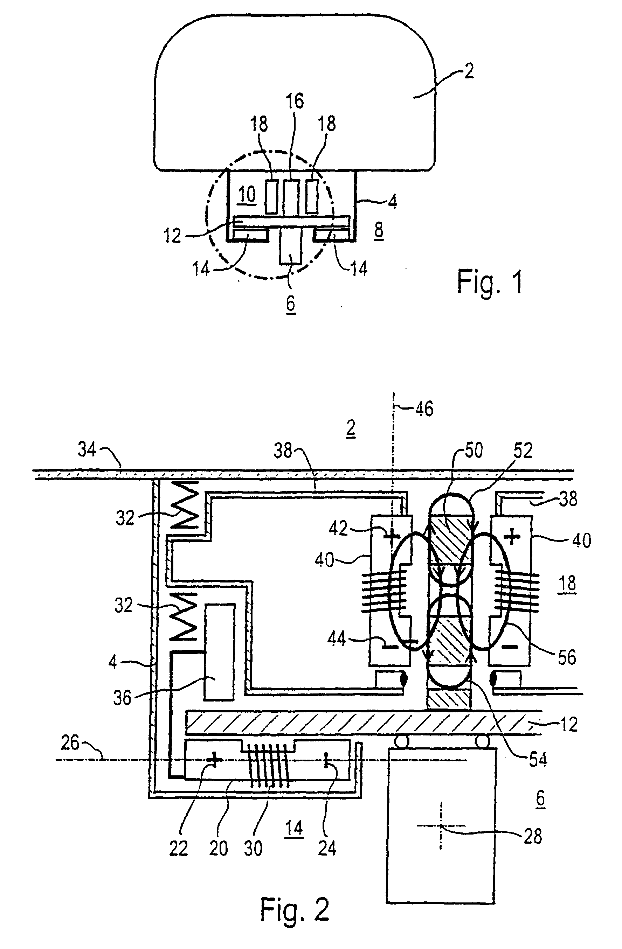

Gemäß FIG 1 ist ein Magnetschwebefahrzeug 2 mit seinem Schweberahmen 4 auf einem Fahrweg 6 schwebend geführt. Ein Fahrsystem des Magnetschwebefahrzeuges 2 umfaßt ein Tragsystem 8 sowie ein Antriebssystem 10. Das Tragsystem 8 wird durch eine ferromagnetische Fahrwegplatte 12 sowie im Schweberahmen 4 fixierte Tragmagnetanordnungen 14 gebildet, die unterhalb der Fahrwegplatte auf beiden Seiten einer Fahrwegstütze 16 angeordnet sind.

Das Antriebssystem 10 umfaßt einen Stator 16, der mit einer fahrzeugseitigen Antriebsmagnetanordnung 18 einen Linear-Gleichstrommotor bildet. Das Antriebssystem 10 ist dabei zugleich als Führsystem für die Seitenführung des Magnetschwebefahrzeuges 2 ausgebildet.

In der vergrößerten Darstellung gemäß FIG 2 ist zu erkennen, daß die Tragmagnetanordnung 14 Tragmagnete 20 mit vorzugsweise u-förmigen Eisenkern enthält, deren zwischen den beiden Magnetpolen 22 und 24 verlaufende magnetische Achse 26 quer zur Längsrichtung 28 des Fahrwegs 6 orientiert ist. Diese Längsrichtung 28 verläuft in der Darstellung gemäß FIG 2 senkrecht zur Zeichenebene. In dieser Längsrichtung 28 sind eine Vielzahl von Tragmagneten 20 hintereinander angeordnet, wobei die hintereinnder angeordneten Magnetpole 22 bzw. 24 jeweils gleiches Vorzeichen haben.

Bei Vorbeifahrt des Magnetschwebefahrzeugs 2, d. h. bei dessen Bewegung in Längsrichtung 28 werden somit in der Fahrwegplatte 12 keine magnetischen Wechselfelder erzeugt, d. h. es findet keine Ummagnetisierung statt, so daß als Fahrwegplatte 12 eine einfache ferromagnetische Stahlplatte verwendet werden kann.

Mit dem in einer Wicklung 30 des Tragmagneten 20 fließenden Strom kann das zum Tragen des Magnetschwebefahrzeuges 2 erforderliche Tragfeld eingestellt werden. Ein über Federn 32 am Fahrzeugboden 34 abgestütztes und mit der Tragmagnetanordnung 18 starr verbundenes Stahlrad 36 dient zum Tragen des Fahrzeugs 2 bei evtl. auftretenden Betriebsstörungen.

Zwischen den Federn 32 ist ein Unterflurrahmen gelagert, in dem die ebenfalls einen u-förmigen Eisenkern aufweisenden Antriebsmagnete 40 der Antriebsmagnetanordnung 18 fixiert sind. Die zwischen den beiden Magnetpolen 42 und 44 verlaufende magnetische Achse 46 der Antriebsmagnete 40 ist senkrecht zur Fahrwegplatte 12 und senkrecht zur Längsrichtung 28 des Fahrwegs 6 orientiert. In Längsrichtung 28 sind eine Vielzahl von Antriebsmagneten 40 hintereinander derart angeordnet, daß die hintereinander angeordneten Magnetpole 42 bzw. 44 jeweils gleiches Vorzeichen haben. Mit anderen Worten: Die hintereinander angeordneten Antriebsmagnete 40 sind identisch ausgerichtet. Jedem Antriebsmagnet 40 ist ein gegenüberliegender, spiegelsymmetrisch angeordneter Antriebsmagnet 40 zugeordnet, so daß die Antriebsmagnetanordnung 18 jeweils paarweise einander gegenüberliegende Antriebsmagnete 40 enthält.

Zwischen den paarweise einander gegenüberliegenden Antriebsmagneten 40 ist ein Stator 50 angeordnet, der im Beispiel der Figur zwei Gleichstromwicklungen 52 und 54 aufnimmt. Die Antriebsmagnete 40 sind somit derart angeordnet, daß sich die beiden Magnetpole 42,44 eines jeden Antriebsmagneten 40 auf einer Seite des Stators 50 befinden und diesem zugewandt sind. Auf diese Weise trägt praktisch das gesamte außerhalb eines Antriebsmagneten 40 verlaufende Magnetfeld zum Erzeugen der Schubkraft bei.

Die Wicklungen 52 und 54 sind schraubenförmig in Längsrichtung 28 auf den Stator 50 aufgewickelt. Sie befinden sich nebeneinander, im Ausfuhrungsbeispiel übereinander auf dem Stator 50 derart, daß eine Wicklung, im Beispiel der Figur die Wicklung 52, den Pluspolen der Antriebsmagnete 40 und die andere Wicklung 54 den Minuspolen der Antriebsmagnete 40 zugeordnet ist. Die Wicklungen 52 und 54 werden gegensinnig vom Gleichstrom durchflossen, so daß durch den von den Antriebsmagneten 40 im Stator erzeugten magnetischen Fluß 56 eine parallel zur Längsrichtung 28 resultierende antreibende oder bremsende Antriebs- oder Schubkraft ausgeübt wird.

Eine im Unterflurrahmen 38 angeordnete Hydraulikbremse 60 dient als Sicherheitsbremse zum Abbremsen des Magnetschwebefahrzeugs 2 bei Störfällen.

Da die magnetischen Achsen 46 der Antriebsmagnete 40 quer zur Längsrichtung 28, d. h. quer zur Bewegungsrichtung des Magnetschwebefahrzeugs 2 angeordnet sind, werden im Stator 50 keine magnetischen Wechselfelder induziert. Der Stator 50 kann deshalb ebenso wie die Fahrwegplatte 12 aus massivem Stahl gefertigt werden.

Das Antriebssystem 10 dient zugleich als Führsystem. Die Antriebsmagnete 40 bilden dabei gemeinsam mit dem Stator 50 Führmagnetpaare, wobei die Führfunktion aus der Differenz des magnetischen Flusses der rechten und der linken Antriebsmagnete 40 resultiert. Da sich die Antriebsfunktion aus der Summe der magnetischen Flüsse der rechten und linken Antriebsmagnete 40 sowie den in den Wicklungen 52 und 54 fließenden Gleichstrom ergibt, sind Antriebsfunktion und Führfunktion voneinander entkoppelt. Je nach Aufteilung der Flußdichten auf die Antriebsmagnetpaare kann die quer zur Längsrichtung 28 auf das Magnetschwebefahrzeug 2 wirkende Kraft unabhängig von der in Längsrichtung 28 wirkenden Antriebskraft eingestellt werden.

Da weder das Tragfeld noch die Seitenführung den Antriebsfluß bestimmen, lassen sich alle drei Funktionen, d.h. die Tragfunktion, die Führfunktion und die Antriebsfunktion getrennt voneinander optimieren. Insbesondere kann eine hohe Antriebskraft durch Erhöhung der diesbezüglichen Induktion erfolgen, ohne daß ein hoher Statorstrom eingespeist werden muß. Dadurch reduzieren sich die Verluste auf den Kabeln und es werden weniger Streckenkabel benötigt. Desweiteren sind Rückwirkungen aus dem Antrieb, beispielsweise bei einem Wicklungskurzschluß, auf Trag- und Fuhrfunktion ausgeschlossen.

Anstelle der im Ausführungsbeispiel gemäß Figur 2 dargestellten Ausführungsform, bei der die Antriebsmagnete 40 vertikal angeordnet sind, ist es in einer alternativen Ausführungsform prinzipiell auch möglich, die Antriebsmagnete ebenfalls paarweise einander gegenüberliegende bei prinzipiell gleicher Ausgestaltung des dazwischen befindlichen Stators horizontal anzuordnen. In einer solchen alternativen Ausführungsform werden die Antriebsmagnete zur Tragfunktion verwendet.

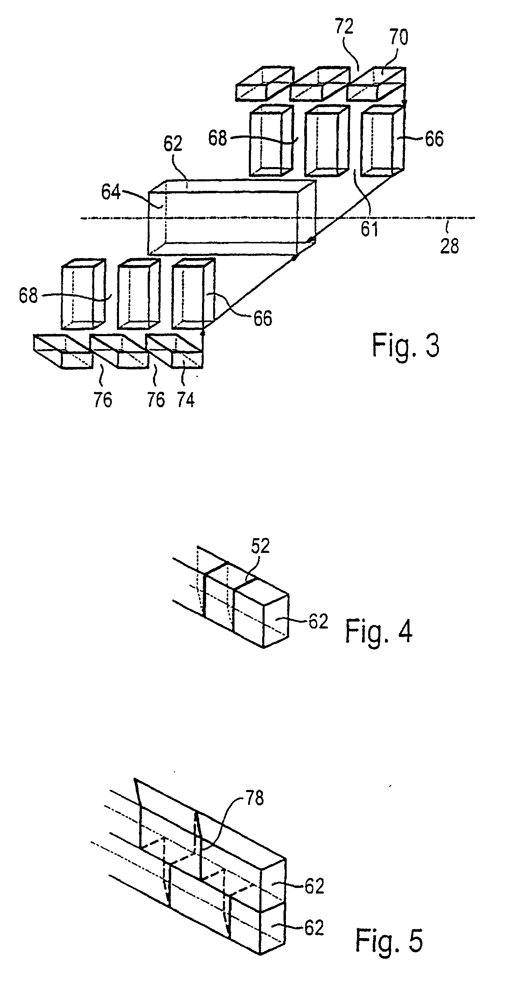

In Figur 3 ist der Aufbau eines Statorober- oder Statorunterteils veranschaulicht. Ein quaderförmiger Kern 62 ist auf seinen Flachseiten 64 mit ebenfalls quaderförmigen Blechstücken 66 verschweißt, die voneinander beabstandet sind und auf diese Weise seitliche Nuten 68 zur Aufnahme des Statorkabels bilden. Auf der einen Schmalseite des Kerns 62 werden einander gegenüberliegende Blechstücke 66 mit Querverbindern 70 verbunden, so daß sich auf dieser Schmalseite eine Nut 72 ergibt, die ebenfalls quer zur Längsrichtung 28 verläuft. Auf der gegenüberliegenden Schmalseite sind Querverbinder 74 vorgesehen, die schräg zur Längsrichtung 28 derart angeordnet sind, daß sie Nuten 76 bilden, die schräg auf der unteren Schmalseite des Kerns 62 verlaufen und eine Verbindung zu einer benachbarten Nut 68 herstellen. Mit dieser Gestaltung kann fertigungstechnisch einfach eine annähernd schraubenförmige Wicklung des Statorkabels auf dem Kern 62 erfolgen. Zwei solche Kerne 62 können nebeneinander angeordnet werden, so daß zwei nebeneinander angeordnete schraubenförmige Wicklungen gebildet werden. Die sich auf diese Weise ergebende Wicklung ist in Figur 4 schematisch veranschaulicht, wobei in diesem Ausführungsbeispiel nur der Kern 62 ohne Querverbinder und Blechstücke dargestellt ist.

Anstelle zweier schraubenförmiger Wicklungen 52, 54 kann auch eine in Form einer Acht verlaufende Wicklung 78 vorgesehen sein, wie sie in FIG 5 schematisch veranschaulicht ist.

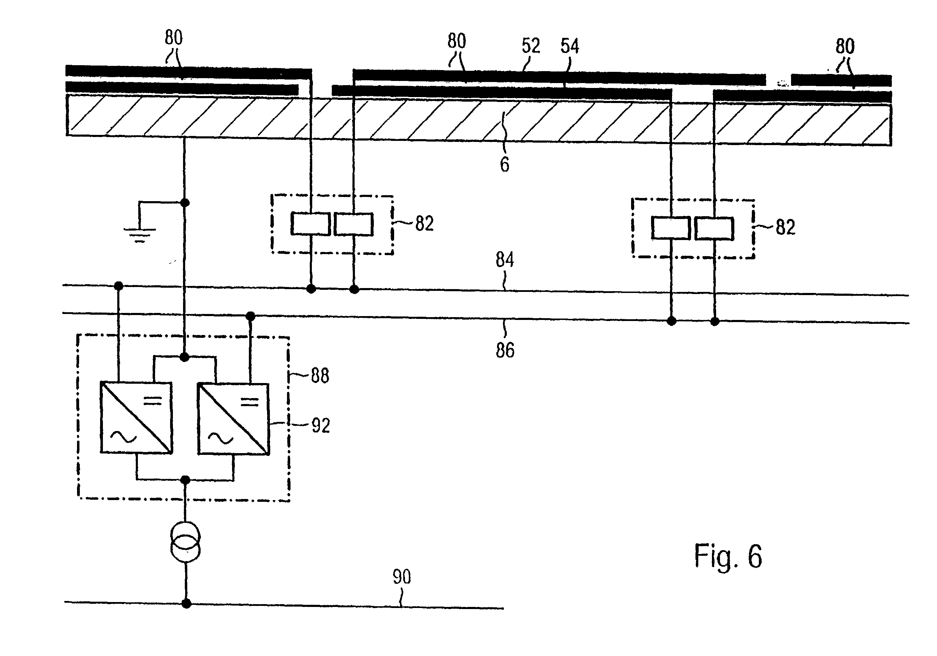

Gemäß FIG 6 enthält der Fahrweg 6 mehrere Statorabschnitte 80. Jeder Statorabschnitt 80 enthält einen in der Figur nicht eingezeichneten Stator mit zwei Wicklungen 52, 54. Die Wicklungen 52, 54 werden über Schaltstellen 82 in Wechselschrittanordnung über Streckenkabel 84 bzw. 86 mit Gleichstrom versorgt. Anstelle von Streckenkabeln können auch einfache Stromschienen verwendet werden. Die Streckenkabel 84 und 86 sind über ein Unterwerk 88 an das Landesnetz 90 angeschlossen. In diesem Unterwerk 88 wird über Gleichrichter 92 der zum Versorgen des Fahrsystems notwendige Gleichstrom erzeugt.

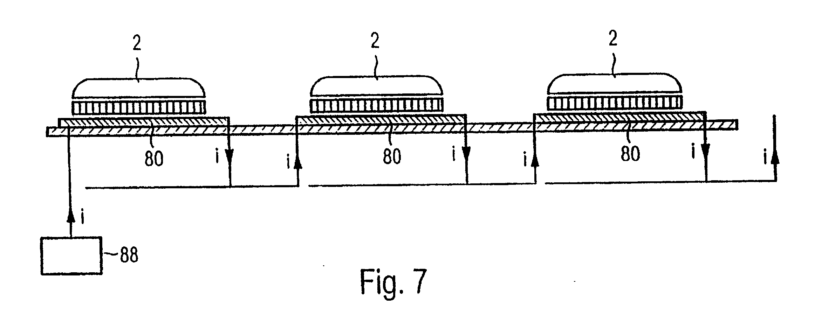

Gemäß FIG 7 ist es bei dezentraler Steuerung vom Fahrzeug aus auch möglich, mehrere Statorabschnitte 80 von einem Unterwerk 88 aus mit Strom zu versorgen. Eine solche dezentrale Steuerung ist durch Steuerung des in den Wicklungen der Antriebsmagnete fließenden Stromes, d.h. über die Einstellung der Induktion der Antriebsmagneten, möglich.

## Patentansprüche

1. Fahrsystem für ein Magnetschwebefahrzeug (2), mit einem Antriebssystem (10), das eine fahrzeugseitige Antriebsmagnetanordnung (18) umfaßt, die mit einem in Längsrichtung (28) des Fahrwegs (6) ausgedehnten Stator (50), auf dem eine sich in der Längsrichtung (28) erstreckende Wicklung (52, 54) aufgewickelt ist, einen Linear-Gleichstrommotor bildet und deren Antriebsmagnete (40) mit ihren die beiden Magnetpole (42,44) verbindenden magnetischen Achsen (46) quer zur Längsrichtung (28) des Fahrwegs (6) derart angeordnet sind, daß die in dieser Längsrichtung (28) hintereinander angeordneten Magnetpole (42,44) gleiches Vorzeichen haben und daß jeweils die zu einem Antriebsmagneten (40) gehörenden Magnetpole (42,44) auf einer Seite des Stators (50) angeordnet und diesem zugewandt sind.

2. Fahrsystem nach Anspruch 1, bei dem die Antriebsmagnete (40) mit ihren zwischen den beiden Magnetpolen (42,44) verlaufenden magnetischen Achsen (46) vertikal angeordnet sind.

3. Fahrsystem nach Anspruch 1 oder 2, bei dem die Antriebsmagnetanordnung (18) jeweils paarweise einander gegenüberliegende Antriebsmagnete (40) enthält, zwischen denen der Stator (50) angeordnet ist.

4. Fahrsystem nach Anspruch 3, bei dem der Stator (50) zwei nebeneinander angeordnete und in Längsrichtung schraubenförmige Wicklungen (52,54) enthält.

5. Fahrsystem nach Anspruch 4, bei dem der Stator (50) eine Wicklung (78) enthält, die in einer Draufsicht in Längsrichtung (28) eine Acht bildet.

6. Fahrsystem nach einem der vorhergehenden Ansprüche, wobei das Antriebssystem (10) zugleich als Führsystem ausgebildet ist.

7. Fahrsystem nach einem der vorhergehenden Ansprüche, mit einer fahrzeugseitigen Tragmagnetanordnung (14), deren Tragmagnete (40) mit ihren zwischen den beiden Magnetpolen (22, 24) verlaufenden magnetischen Achsen (26) horizontal und quer zur Längsrichtung (28) des Fahrwegs (6) derart angeordnet sind, daß die in diese Längsrichtung (28) hintereinander angeordneten Magnetpole (22,24) gleiches Vorzeichen haben.

8. Fahrsystem nach Anspruch 6, mit einer als Fahrweg (6) dienenden ferromagnetischen Fahrwegplatte (12).

9. Fahrsystem nach Anspruch 8, bei dem die Tragmagnete (20) fahrzeugseitig unterhalb der Fahrwegplatte (12) angeordnet sind.

10. Fahrsystem nach einem der vorhergehenden Ansprüche, bei dem die Schubkraft für das Magnetschwebefahrzeug (2) zentral von einem Unterwerk (88) aus über den jeweiligen Statorstrom einstellbar ist.

11. Fahrsystem nach einem der vorhergehenden Ansprüche, bei dem die Schubkraft für das Magnetschwebefahrzeug (2) dezentral im Magnetschwebefahrzeug (2) selbst über die Induktion der Antriebsmagnete einstellbar ist.

## Claims

1. Propulsion system for a magnetically levitated vehicle (2), having a drive system (10) that comprises a drive-magnet arrangement (18) in the vehicle that forms a linear direct-current motor with a stator (50) that extends in the longitudinal direction (28) of the guideway (6) and on which a winding (52, 54) extending in the longitudinal direction (28) is wound and whose drive magnets (40) are disposed with their magnetic axes (46) connecting the two magnet poles (42, 44) transversely with respect to the longitudinal direction (28) of the guideway (6) in such a way that the magnet poles (42, 44) disposed behind one another in said longitudinal direction (28) have an identical sign, and in that the magnet poles (42, 44) belonging to a drive magnet (40) are each disposed on one side of the stator (50) and face it.

2. Propulsion system according to Claim 1, in which the drive magnets (40) are disposed vertically with their magnetic axes extending between the two magnet poles (42, 44).

3. Propulsion system according to Claim 1 or 2, in which the drive-magnet arrangement (18) contains drive magnets (40) that are each mutually opposite in pairs and between which the stator (50) is disposed.

4. Propulsion system according to Claim 3, in which the stator (50) contains two windings (52, 54) that are disposed beside one another and are helical in the longitudinal direction.

5. Propulsion system according to Claim 4, in which the stator (50) contains a winding (78) that forms a figure of eight in plan view in the longitudinal direction (28).

6. Propulsion system according to any of the preceding claims, wherein the drive system (10) is also designed as a guide system.

7. Propulsion system according to any of the preceding claims, having a suspension-magnet arrangement (14) in the vehicle whose suspension magnets (40) are disposed with their magnetic axes (26) extending between the two magnet poles (22, 24) horizontally and transversely to the longitudinal direction (28) of the guideway (6) in such a way that the magnet poles (22, 24) disposed behind one another in the longitudinal direction (28) have the same sign.

8. Propulsion system according to Claim 6, having a ferromagnetic guideway plate (12) that serves as guideway (6).

9. Propulsion system according to Claim 8, in which the support magnets (20) in the vehicle are disposed underneath the guideway plate (12).

10. Propulsion system according to any of the preceding claims, in which the thrust for the magnetically levitated vehicle (2) can be adjusted centrally from a substation (88) by means of the respective stator current.

11. Propulsion system according to any of the preceding claims, in which the thrust for the magnetically levitated vehicle (2) can be adjusted locally in the magnetically levitated vehicle (2) itself by means of the induction of the drive magnets.

## Revendications

1. Système de déplacement pour un véhicule à sustentation magnétique (2), comprenant un système de propulsion (10) qui comprend côté véhicule un arrangement d'aimants de propulsion (18) qui forme un moteur linéaire à courant continu avec un stator (50) - qui s'étend en direction longitudinale (28) de la piste (6) et sur lequel est enroulé un enroulement (52, 54) s'étendant en direction longitudinale (28) - et dont les aimants de propulsion (40) avec leurs axes magnétiques (46) qui relient les deux pôles magnétiques (42, 44) sont disposés transversalement à la direction longitudinale (28) de la piste (6) de telle manière que les pôles magnétiques (42, 44) placés les uns derrière les autres dans cette direction longitudinale (28) ont le même signe et que les pôles magnétiques (42, 44) faisant partie d'un aimant de propulsion (40) sont à chaque fois placés sur un côté du stator (50) et sont orientés vers ce dernier.

2. Système de déplacement selon la revendication 1 selon lequel les axes magnétiques (46) qui s'étendent entre les deux pôles magnétiques (42, 44) des aimants de propulsion (40) sont disposés verticalement.

3. Système de déplacement selon la revendication 1 ou 2 selon lequel l'arrangement d'aimants de propulsion (18) comporte des aimants de propulsion (40) placés à chaque fois par paire l'un en face de l'autre et entre lesquels est placé le stator (50).

4. Système de déplacement selon la revendication 3 selon lequel le stator (50) a deux enroulements (52, 54) placés l'un à côté de l'autre et hélicoïdaux en direction longitudinale.

5. Système de déplacement selon la revendication 4 selon lequel le stator (50) a un enroulement (78) qui, vu de dessus, forme un huit en direction longitudinale (28).

6. Système de déplacement selon l'une des revendications précédentes selon lequel le système de propulsion (10) est en même temps conformé en tant que système de guidage.

7. Système de déplacement selon l'une des revendications précédentes avec un arrangement d'aimants de portage (14) côté véhicule dont les axes magnétiques (26) qui s'étendent entre les deux pôles magnétiques (22, 24) des aimants de portage (40), sont placés horizontalement et transversalement à la direction longitudinale de la piste (6), de telle sorte que les pôles magnétiques (22, 24) disposés l'un derrière l'autre en direction longitudinale (28) ont le même signe.

8. Système de déplacement selon la revendication 6 ayant une plaque de piste (12) ferromagnétique qui sert de piste (6).

9. Système de déplacement selon la revendication 8 selon lequel les aimants de portage (20) sont placés au-dessous de la plaque de piste (12) côté véhicule.

10. Système de déplacement selon l'une des revendications précédentes selon lequel la poussée pour le véhicule à sustentation magnétique (2) peut être réglée centralement à partir d'une sous-station (88) au moyen du courant de stator concerné.

11. Système de déplacement selon l'une des revendications précédentes selon lequel la poussée pour le véhicule à sustentation magnétique (2) peut être réglée de façon décentralisée dans le véhicule à sustentation magnétique (2) lui-même au moyen de l'induction des aimants de propulsion.
